# EUROPÄISCHE PATENTANMELDUNG

(11) **EP 1 593 874 A1**
(43) Veröffentlichungstag der Anmeldung: **09.11.2005**
(21) Anmeldenummer: 05009110.7
(22) Anmeldetag: 26.04.2005
(51) Int. Cl.: F16F 9/49, F16F 9/36

(54) **Schwingungsdämpfer mit Zuganschlag**

(30) Priorität: 03.05.2004 DE 102004021558
(71) Anmelder: DaimlerChrysler AG, 70567 Stuttgart (DE)
(72) Erfinder: Mayer, Johann, 71069 Sindelfingen (DE); Römer, Matthias, 71155 Altdorf (DE)

(57) **Zusammenfassung**

Die Erfindung betrifft einen Schwingungsdämpfer mit Zuganschlag. Dabei wird ein Anschlagelement (30) verwendet, über das der Wirkbeginn der Zuganschlagfeder (25) verstellbar ist.

Erfindungsgemäß weist das Anschlagelement (30) eine Kolben-Zylinder-Einheit (31) auf, deren Kolben einen Verdrängerraum (55) von einem der Kammern (16;17) trennt, wobei der Verdrängerraum (55) mit dieser Kammer (16) über eine im Anschlagelement (30) befindliche Drossel (40) wirkverbunden ist.

## Beschreibung

Die Erfindung betrifft einen Schwingungsdämpfer mit Zuganschlag gemäß des Oberbegriffs des Anspruchs 1.

Ein derartiger Schwingungsdämpfer ist aus der DE 100 16 641 A1 bekannt. Dort ist ein Schwingungsdämpfer mit Zuganschlag offenbart, dessen Einsatzzeitpunkt mittels eines schaltbaren Ventils variiert werden kann.

Aufgabe der Erfindung ist es demgegenüber, einen Schwingungsdämpfer mit Zuganschlag anzugeben, der kostengünstiger gefertigt und einfacher betrieben werden kann.

Diese Aufgabe wird durch die Merkmale des Anspruchs 1 gelöst.

Grundgedanke der Erfindung ist, den Anschlag der Zuganschlagfeder zwar variabel aber nicht aktiv mittels einer äußeren Regelung oder Steuerung sondern passiv zu betreiben. Dabei wird die Tatsache ausgenutzt, dass die Kolbenstange und der daran befestigte Arbeitskolben während des Fahrbetriebs eines mit einem derartigen Schwingungsdämpfers versehenen Fahrzeuges nicht in einer statischen Mittellage verharrt, sondern entsprechend der Fahrbahnanregung ständig axiale Bewegungen unterschiedlicher Amplituden durchführt.

Ein erfindungsgemäßer Schwingungsdämpfer weist ein Anschlagelement mit einer Kolben-Zylinder-Einheit auf, deren Kolben einen Verdrängerraum von einem der Kammern des Arbeitsraums trennt. Dabei ist der Verdrängerraum mit dieser Kammer über eine im Anschlagelement befindliche Drossel wirkverbunden. Der Kolben wird durch mechanischen Kontakt mit der Zuganschlagfeder verschoben. Diese Verschiebung erfolgt gegen die Kraft einer Feder, welche den Kolben stets in seine Ausgangsposition zu verschieben sucht, sowie gegen den Druck im Verdrängerraum, der sich bei bewegtem Kolben infolge der Drosselung aufbaut. Durch die veränderbare Position des Kolbens wird der Einsatzzeitpunkt der Zuganschlagfeder verändert.

Einsatz findet ein derartiger Schwingungsdämpfer insbesondere bei Fahrzeugen, die über eine Niveauregulierung verfügen. Der Aufbau derartiger Fahrzeuge kann beispielsweise zur Verringerung des Luftwiderstands gegenüber der Fahrbahn abgesenkt oder beim Befahren von sogenannten Schlechtwegstrecken gegenüber der Fahrbahn angehoben werden. Dabei tritt üblicherweise das Problem auf, dass der Arbeitskolben des Schwingungsdämpfers aus seiner relativen Mittellage im Dämpfergehäuse verschoben wird.

Bei einem abgesenkten Aufbau befindet sich die Kolbenstange, der Arbeitskolben und die mit diesem verspannte Zuganschlagfeder gegenüber der Normallage tiefer im Dämpfer. Dies bedeutet bei herkömmlichen Schwingungsdämpfern mit Zuganschlagfeder, dass der Kolben einen längeren Weg zurücklegen muss, bis die Zuganschlagfeder durch Anlage an einem Anschlag wirkt. Dies ist gleichbedeutend damit, dass ein mit derartigen Schwingungsdämpfern ausgestattetes Fahrzeug größeren Wankwinkel unterliegt, bevor die Wirkung der Zuganschlagfeder einsetzt.

Bei einem angehobenen Aufbau hingegen ist der Abstand zwischen Zuganschlagfeder und Anschlag vielfach derart gering, dass bei nahezu jeder Wankbewegung bereits die Wirkung der Zuganschlagfeder einsetzt. Beide Situationen sind dem Fahrkomfort und/oder der Fahrdynamik abträglich.

Diese Zustände werden durch einen erfindungsgemäßen Schwingungsdämpfer vermieden. Der schematische Aufbau möglicher Ausführungsformen sowie die Funktionsweise eines derartigen Schwingungsdämpfers wird nachfolgend anhand der Zeichnung näher beschrieben.

Dabei zeigt:
- Fig. 1: einen Ausschnitt eines Längsschnitts durch einen erfindungsgemäßen Schwingungsdämpfer,
- Fig. 2: einen Schwingungsdämpfer gem. Fig. 1 mit zwei Drosseln und Rückschlagventilen,
- Fig. 3: einen Ausschnitt aus einer Darstellung eines Schwingungsdämpfers gem. Fig. 1 bei einer alternativen Ausführungsform,
- Fig. 4: eine Darstellung eines Schwingungsdämpfers gem. Fig. 3 einer weiteren alternativen Ausführungsform.

In einem Dämpferrohr 1 ist eine Kolbenstange 5 axial beweglich angeordnet. Am unteren Ende der Kolbenstange 5 ist ein Arbeitskolben 10 über eine Schraubverbindung 13 form- und kraftschlüssig mit der Kolbenstange 5 verbunden. Die Erfindung umfasst auch Ausführungsformen, die einen in axialer Richtung gleitbeweglich gelagerten Arbeitskolben 10 vorsehen. Der Arbeitskolben 10 weist Bohrungen 11 auf, die in herkömmlicher Form teilweise von Federpaketen 12 verschlossen sind. Durch den Arbeitskolben 10 wird ein vom Dämpferrohr 1 umschlossener Arbeitsraum 15 in eine obere und eine untere Kammer 16,17 unterteilt.

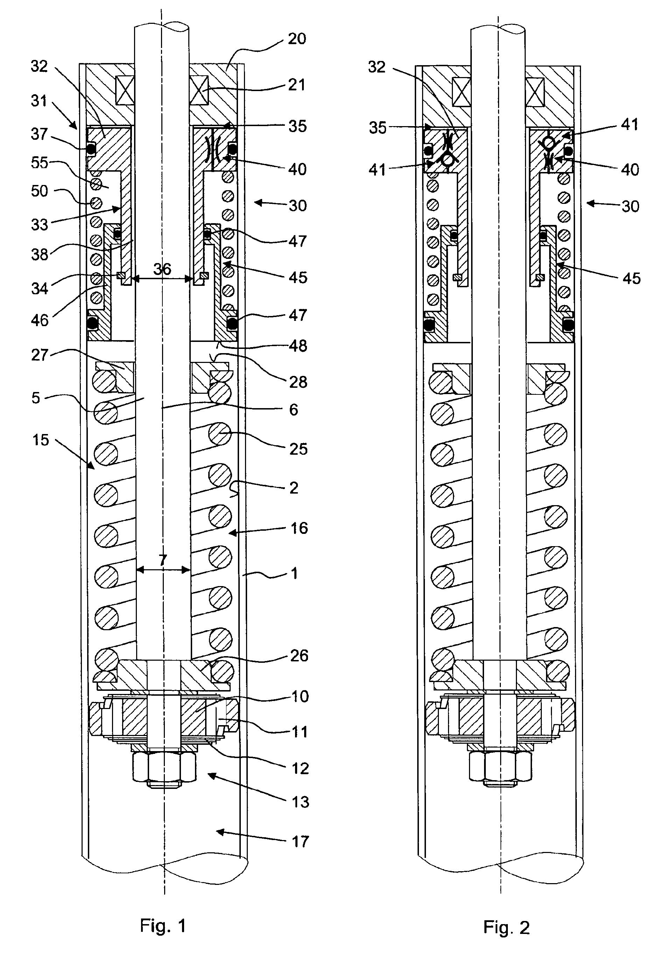

In den in Fig. 1 bis 4 dargestellten Ausschnitten ist jeweils nur das obere Ende eines Schwingungsdämpfergehäuses dargestellt. Der vom Dämpferrohr 1 zumindest teilweise umgebene Arbeitsraum 15 ist mit Hydraulikflüssigkeit gefüllt und wird am axial oberen Ende durch eine Dichtungsführungseinheit 20 abgeschlossen. Diese Dichtungsführungseinheit 20 umgibt die Kolbenstange 5 ringförmig und stellt damit ein Führungslager für die Kolbenstange 5 dar. Mittels einer in die Dichtungsführungseinheit 20 integrierten Dichtung 21 wird ein Austreten von Hydraulikflüssigkeit aus dem Arbeitsraum 15 verhindert.

Oberhalb des Arbeitskolbens 10 ist ein unteres Trägerelement 26 mit der Kolbenstange 5 verspannt, auf dem sich eine die Kolbenstange 5 spiralförmig umgebende Zuganschlagfeder 25 abstützt. Am oberen axialen Ende der Zuganschlagfeder 25 ist ein oberes Trägerelement 27 mit der Zuganschlagfeder 25 verklemmt, welches von der Kolbenstange 5 durchquert ist. Dadurch wird eine annähernd koaxiale Ausrichtung der Zuganschlagfeder 25 zur Längsachse 6 der Kolbenstange 5 erreicht. An der von der Zuganschlagfeder 25 abgewandten Stirnseite 28 weist das obere Trägerelement 27 eine überwiegend plane bzw. zur Vermeidung von Festsaugeffekten ballig geformte oder segmentierte Oberfläche auf.

Zwischen der Zuganschlagfeder 25 und der Dichtungsführungseinheit 20 ist ein koaxial zur Längsachse 6 der Kolbenstange 5 ausgestaltetes Anschlagelement 30 angeordnet, über das der Wirkbeginn der Zuganschlagfeder 25 variabel verstellbar ist. Das Anschlagelement 30 weist eine Kolben-Zylinder-Einheit 31 auf, wobei der Zylinder durch einen Abschnitt des Dämpferrohres 1 gebildet wird. Jedoch sind auch Ausführungen denkbar, bei denen das Anschlagelement 30 einen Zylinder mit gegenüber dem Dämpferrohr 1 verringertem Außendurchmesser gebildet wird.

Das Anschlagelement 30 beinhaltet einen überwiegend rotationssymmetrischen Grundkörper 32, der koaxial zur Längsachse 6 der Kolbenstange 5 ausgebildet ist und einen nach unten ragenden, hülsenförmigen Abschnitt 33 aufweist. An der oberen Stirnfläche liegt der Grundkörper 32 bis auf eine radial verlaufende Nut 35 vollflächig an der Dichtungsführungseinheit 20 an. Möglich ist auch eine kraftschlüssige Verbindung zwischen Grundkörper 32 und Dichtungsführungseinheit 20 beispielsweise durch Verschraubung.

Gegenüber dem Außendurchmesser 7 der Kolbenstange 5 besitzt der Grundkörper 32 einen vergrößerten Innendurchmesser 36, so dass ein Ringspalt 38 zwischen Kolbenstange 5 und Grundkörper 32 vorliegt.

Zwischen der Innenwand des Dämpferrohres 2 und dem Grundkörper 32 ist eine Dichtung 37 angeordnet. Zwischen dem hülsenförmigen Abschnitt 33 und der Innenwand 2 des Dämpferrohres 1 wird ein Kolben 45 der Kolben-Zylinder-Einheit 31 axial beweglich geführt. Der Kolben 45 ist stufenförmig ausgeführt und beinhaltet einen axialen Abschnitt 46. An diesem axialen Abschnitt 46 wird eine Feder 50 geführt, die zwischen dem Kolben 45 und dem Grundkörper 32 wirkt und diese beiden Bauteile 32,45 von einander zu trennen sucht. Durch die Führung wird ein Verkippen bzw. Verkanten der Feder 50 wirksam vermieden.

Am unteren Ende des hülsenförmigen Abschnitts 33 ist ein Sprengring 34 als Anschlag für den Kolben 45 montiert.

Am Innen- und Außenumfang des Kolbens sind Dichtungen 47 vorgesehen. Diese begrenzen mit dem Kolben 45, dem Grundkörper 32 des Anschlagelements 30 und dem Dämpferrohr 1 einen Verdrängerraum 55, der ebenfalls mit Hydraulikflüssigkeit gefüllt ist und über eine Drosselbohrung 40, die Nut 35 in der oberen Stirnfläche des Grundkörpers 32 sowie den Ringspalt 38 mit der oberen Kammer 16 in Verbindung steht.

Nachfolgend wird die Funktionsweise des erfindungsgemäßen Schwingungsdämpfers erläutert.

Wird die Kolbenstange 5 relativ zum Dämpferrohr 1 nach oben bewegt, gelangt zu einem definierten Zeitpunkt das oberer Trägerelement 27 mit seiner Oberfläche 28 zur Anlage an die untere Stirnfläche 48 des Kolbens 45 des Anschlagselements 30. Dies ist der Zeitpunkt, zu dem die Wirkung der Zuganschlagfeder 25 einsetzt. Dieser Zeitpunkt ist jedoch davon abhängig, wo sich der Kolben 45 des Anschlagelements 30 in Relation zum Grundkörper 32 befindet. Ist der Verdrängerraum 55 aufgrund eines "eingefahrenen" Kolbens 45 klein, erfolgt der Anschlag zwischen oberem Trägerelement 27 der Zuganschlagfeder 25 und Kolben 45 spät, also erst, wenn die Kolbenstange 5 in Bezug auf eine mittlere Lage des Arbeitskolbens 10 relativ weit aus dem Dämpferrohr 1 herausgezogen ist.

Ist der Verdrängerraum 55 aufgrund eines "ausgefahrenen" Kolbens 45 hingegen groß, erfolgt der Anschlag zwischen oberem Trägerelement 27 der Zuganschlagfeder 25 und Kolben 45 früh, also bereits, wenn die Kolbenstange 5 in Bezug auf eine mittlere Lage des Arbeitskolbens 10 nur relativ wenig aus dem Dämpferrohr 1 herausgezogen ist.

Die Größe des Verdrängerraumes 55 variiert und ist abhängig von Anzahl und Ausmaß von Relativbewegungen des Arbeitskolbens 45 zum Dämpferrohr 1, von der Größe und Geometrie der Drosselbohrung 40, von der Federkraft der Feder 50 des Anschlagelements 30 und der Zuganschlagfeder 25 sowie von der Viskosität des Hydrauliköls.

Jedes Mal, wenn die Zuganschlagfeder 25 mit der Oberfläche 28 des oberen Trägerelements 27 gegen die untere Stirnfläche 48 des Kolbens 45 stößt, wird Hydraulikflüssigkeit aus dem Verdrängerraum 55 über die Drosselbohrung 40, die Nut 35 und den Ringspalt 38 in die obere Kammer 16 verdrängt. Dabei wird der Verdrängerraum 55 gegen die Kraft der Feder 50 verkleinert und der Kolben 45 nach oben verschoben, wodurch der Einsatzzeitpunkt der Zuganschlagfeder 25 in Richtung "spät" verschoben wird.

Stößt das obere Trägerelement 27 nicht an den Kolben 45, bewirkt die Feder 55 des Anschlagelements 30, dass der Kolben 45 gezielt verlangsamt durch die Drossel nach unten verschoben wird, bis dieser entweder zur Anlage an das obere Trägerelement 27 gelangt oder durch den Sprengring 34 an einem weiteren Verschieben gehindert wird.

In Fig. 2 ist eine alternative Ausführungsform des erfindungsgemäßen Schwingungsdämpfers dargestellt. Der Grundkörper 32 des Anschlagelements 30 weist zwei Drosselbohrungen 40 auf, denen je ein Rückschlagventil 41 zugeordnet ist. Dabei öffnen die Rückschlagventile 41 in unterschiedlichen Richtungen. Das in Fig. 2 auf der rechten Seite dargestellte Rückschlagventil 41 öffnet, wenn der Druck im Verdrängerraum 55 größer ist als in der Nut 35 des Grundkörpers 32. Das Rückschlagventil 41 auf der linken Seite ist dabei geschlossen. Ist der Druck im Verdrängerraum 55 niedriger als der Druck in der Nut 35 des Grundkörpers 32, öffnet das auf der linken Seite dargestellte Rückschlagventil 41 und das auf der rechten Seite schließt. Somit ist es möglich, durch unterschiedliche Geometrien der Drosselbohrungen 40 unterschiedliche Geschwindigkeiten des Kolbens 45 beim Ein- und Ausfahren zu bewirken.

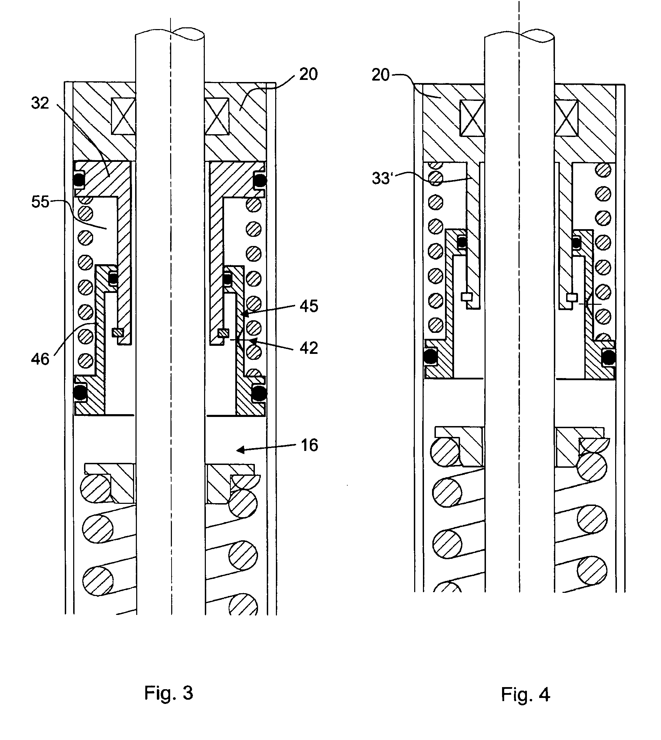

In Fig. 3 liegt die obere Stirnseite des Grundkörpers direkt an der Dichtungsführungseinheit 20 an. Eine Nut 35 wie in den Fig. 1 und 2 dargestellt, ist nicht vorhanden. Statt dessen ist im axialen Abschnitt des Kolbens 45 eine blendenartige Bohrung 42 vorgesehen, über die der Austausch der Hydraulikflüssigkeit zwischen der oberen Kammer 16 und dem Verdrängerraum 55 erfolgen kann. Im Kolben 45 können auch mehrere Blenden 42 mit gleichen und/oder unterschiedlichen Geometrien vorgesehen werden.

Eine Ausführungsform nach Fig. 3 zeichnet sich durch eine einfache Herstellung aus, da auf ein Drosselbohrung 40 im Grundkörper 32 sowie die Herstellung der Nut 35 verzichtet wird.

In Fig. 4 ist eine Ausführungsform dargestellt, bei der eine gegenüber den Fig. 1 bis 3 veränderte Dichtungsführungseinheit 20 verwendet wird. Diese ist einstückig mit einem hülsenförmigen Abschnitt 33' analog des entsprechenden Abschnitts 33 des Grundkörpers 32 in den Fig. 1 bis 3 ausgeführt. Vorteil dieser Ausführungsform ist eine verkürzte Bauraumlänge des Anschlagelements 30 und der Wegfall einer Dichtung 37.

## Patentansprüche

1. Schwingungsdämpfer mit Zuganschlag mit
- einem Dämpferrohr, in dem eine Kolbenstange axial beweglich angeordnet ist,
- einem an der Kolbenstange geführten Arbeitskolben, der einen vom Dämpferrohr zumindest teilweise umgebenen, mit Hydraulikflüssigkeit gefüllten Arbeitsraum in zwei Kammern unterteilt,
- einer von der Kolbenstange durchdrungenen Dichtungsführungseinheit, die den Arbeitsraum axial in einer Richtung begrenzt,
- einer zwischen Arbeitskolben und Dichtungsführungseinheit angeordneten Zuganschlagfeder und
- einem Anschlagelement, über das der Wirkbeginn der Zuganschlagfeder verstellbar ist,
**dadurch gekennzeichnet,**
**dass** das Anschlagelement (30) eine Kolben-Zylinder-Einheit (31) aufweist, deren Kolben (45) einen Verdrängerraum (55) von einem der Kammern (16;17) trennt, wobei der Verdrängerraum (55) mit dieser Kammer (16) über eine im Anschlagelement (30) befindliche Drossel (40) wirkverbunden ist.

2. Schwingungsdämpfer nach Anspruch 1,
**dadurch gekennzeichnet,**
**dass** die Kolben-Zylinder-Einheit (31) eine Feder (50) aufweist, die der Zuganschlagfeder (25) entgegenwirkt.

3. Schwingungsdämpfer nach Anspruch 1 oder 2,
**dadurch gekennzeichnet,**
**dass** die Drossel (40) im Kolben (45) des Anschlagelements (30) angeordnet ist.

4. Schwingungsdämpfer nach einem der vorhergehenden Ansprüche,
**dadurch gekennzeichnet,**
**dass** der Zylinder der Kolben-Zylinder-Einheit (31) zumindest teilweise durch einen Abschnitt des Dämpferrohres (1) gebildet wird.

5. Schwingungsdämpfer nach einem der vorhergehenden Ansprüche,
**dadurch gekennzeichnet,**
**dass** das Anschlagelement (30) die Kolbenstange (5) ringförmig umgibt und einen Grundkörper (32) mit einem hülsenförmigen Abschnitt (33) aufweist, der zumindest bereichsweise koaxial zur Längsachse (6) der Kolbenstange (5) verläuft.

6. Schwingungsdämpfer nach Anspruch 5,
**dadurch gekennzeichnet,**
**dass** der Kolben (45) zwischen dem hülsenförmigen Abschnitt (33) des Grundkörpers (32) und der Innenwand (2) des Dämpferrohres (1) axial beweglich angeordnet ist.

7. Schwingungsdämpfer nach einem der Ansprüche 2 bis 6,
**dadurch gekennzeichnet,**
**dass** die Feder (50) an dem Kolben (45) geführt wird und zwischen dem Grundkörper (32) und dem Kolben (45) wirkt.

8. Schwingungsdämpfer nach einem der vorhergehenden Ansprüche,
**dadurch gekennzeichnet,**
**dass** im Anschlagelement (30) zwei Drosseln (40) angeordnet sind, die jeweils mit einem Rückschlagventile (41) zusammenwirken, wobei die Rückschlagventile (41) in entgegengesetzten Richtungen öffnen.

9. Schwingungsdämpfer nach einem der vorhergehenden Ansprüche,
**dadurch gekennzeichnet,**
**dass** das Anschlagelement (30) mit der Dichtungsführungseinheit (20) kraftschlüssig verbunden ist.

10. Schwingungsdämpfer nach einem der Ansprüche 5 bis 8,
**dadurch gekennzeichnet,**
**dass** der Grundkörper (32) des Anschlagelements (30) einstückig aus der Dichtungsführungseinheit (20) gebildet ist.
